(19) Europäisches Patentamt
European Patent Office
Office européen des brevets

(11) EP 4 659 851 A1

(12) EUROPEAN PATENT APPLICATION
published in accordance with Art. 153(4) EPC

(43) Date of publication:
**10.12.2025 Bulletin 2025/50**

(21) Application number: **24750384.0**

(22) Date of filing: **01.02.2024**

(51) International Patent Classification (IPC):
***B01D 71/56*** *(2006.01)* ***B01D 69/00*** *(2006.01)*
***B01D 69/02*** *(2006.01)* ***B01D 69/10*** *(2006.01)*
***B01D 69/12*** *(2006.01)* ***B01D 71/38*** *(2006.01)*

(52) Cooperative Patent Classification (CPC):
**B01D 69/00; B01D 69/02; B01D 69/10; B01D 69/12; B01D 71/38; B01D 71/56;**
Y02A 20/131

(86) International application number:
**PCT/JP2024/003269**

(87) International publication number:
**WO 2024/162435 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 JP 2023015305**

(71) Applicant: **Toray Industries, Inc.**
**Tokyo 103-8666 (JP)**

(72) Inventors:
- **YASUDA Takaaki**
**Otsu-shi, Shiga 520-8558 (JP)**
- **MIZUNO Shunsuke**
**Otsu-shi, Shiga 520-8558 (JP)**
- **MINEHARA Hiroki**
**Otsu-shi, Shiga 520-8558 (JP)**
- **OGAWA Takafumi**
**Otsu-shi, Shiga 520-8558 (JP)**

(74) Representative: **Hoefer & Partner Patentanwälte mbB**
**Pilgersheimer Straße 20**
**81543 München (DE)**

# (54) COMPOSITE SEMIPERMEABLE MEMBRANE, COMPOSITE SEMIPERMEABLE MEMBRANE MODULE, AND FLUID SEPARATION DEVICE

(57) The present invention provides a composite semipermeable membrane that has excellent water permeability performance while having exceptional abrasion resistance. This composite semipermeable membrane comprises a support membrane, a separation function layer that contains a cross-linking polyamide, and a coating layer that is positioned on the separation function layer, the developed interfacial area ratio Sdr of the coating-layer-side surface being 60-200%, and the coefficient of static friction μs between the coating-layer-side surface and a wrapping film having a #2000 grain size being 0.40-1.30.

*FIG. 1*

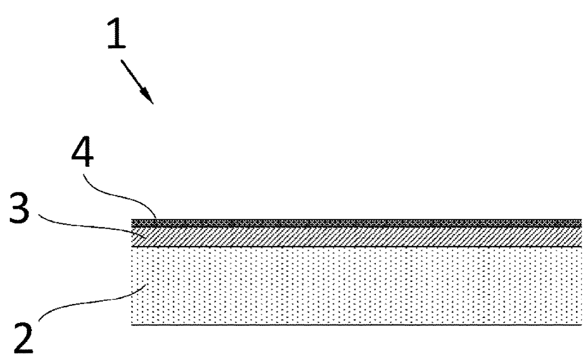


EP 4 659 851 A1

## Description

### TECHNICAL FIELD

The present invention relates to a composite semipermeable membrane, a composite semipermeable membrane module, and a fluid separation device useful for selective separation of a liquid mixture.

### BACKGROUND ART

There are various techniques for removing substances (for example, salts) dissolved in a solvent (for example, water), and in recent years, membrane separation methods using a semipermeable membrane such as a reverse osmosis membrane or a nanofiltration membrane have been widely used as processes for energy saving and resource saving.

As a currently commercially available reverse osmosis membrane and nanofiltration membrane, a composite semipermeable membrane having a support membrane and a separation functional layer laminated on the support membrane is generally used. As a separation functional layer, a crosslinked polyamide obtained by a polycondensation reaction between a polyfunctional amine and a polyfunctional acid halide is known.

In such a composite semipermeable membrane, since the separation functional layer is thin, there is a problem that the separation performance is likely to decrease due to abrasion of the separation functional layer. Examples of the cause of abrasion include contact between composite semipermeable membranes when stacked for storage after production, and contact between the composite semipermeable membrane and a packaging material for storage. In many cases, the composite semipermeable membrane is used in a state of being incorporated in an element having two or more composite semipermeable membranes and a flow channel material inserted therebetween. Contact between the composite semipermeable membrane and a member of an assembly device or a member of the element during assembly of the element is also a cause of abrasion.

Various methods are disclosed as a method for preventing such a decrease in separation performance due to abrasion. For example, Patent Literature 1 discloses a method for preventing abrasion of a separation functional layer by disposing a coating layer made of a polymer such as polyvinyl alcohol on a surface of the separation functional layer. Patent Literature 2 discloses a method for preventing the occurrence of membrane defects due to abrasion of a separation functional layer by the separation functional layer having a sufficient amount of polyamide.

### CITATION LIST

### PATENT LITERATURE

Patent Literature 1: JP2003-200026A
Patent Literature 2: JP2019-98329A

### SUMMARY OF INVENTION

### TECHNICAL PROBLEM

In the method disclosed in Patent Literature 1, a certain level of abrasion resistance-improving effect is observed, but there is a problem that the water-permeating performance of the composite semipermeable membrane decreases due to the presence of the coating layer. In the method disclosed in Patent Literature 2, there is a problem that the amount of polyamide in the separation functional layer and the water-permeating performance of the composite semipermeable membrane are in a trade-off relation.

Therefore, an object of the present invention is to provide a composite semipermeable membrane having excellent abrasion resistance and good water-permeating performance.

### SOLUTION TO PROBLEM

In order to solve the above problems, the present invention provides the following composite semipermeable membrane, composite semipermeable membrane module, and fluid separation device.

[1] A composite semipermeable membrane including:

a support membrane;
a separation functional layer containing a crosslinked polyamide disposed on the support membrane; and
a coating layer disposed on the separation functional layer, in which
a developed area ratio Sdr of a coating layer-side surface of the composite semipermeable membrane is 60% to 200%, and
a static friction coefficient μs between the coating layer-side surface of the composite semipermeable membrane and a lapping film abrasive having a particle size of # 2000 is 0.40 to 1.30.

[2] The composite semipermeable membrane according to [1], in which
a dynamic friction coefficient μd between the coating layer-side surface of the composite semipermeable membrane and a lapping film abrasive having a particle size of # 2000 is 0.25 to 0.73.
[3] The composite semipermeable membrane according to [1] or [2], in which
the coating layer-side surface of the composite semipermeable membrane has a root mean square height Sq of 140 nm to 300 nm.
[4] The composite semipermeable membrane according to any one of [1] to [3], in which
the coating layer contains at least one of a vinyl alcohol-based polymer and an alkylene glycol-based polymer.
[5] The composite semipermeable membrane according to [4], in which
the vinyl alcohol-based polymer has a degree of saponification of 96 mol% or more.
[6] The composite semipermeable membrane according to [4] or [5], in which
the vinyl alcohol-based polymer has a degree of polymerization of 100 to 1,500.
[7] The composite semipermeable membrane according to any one of [4] to [6], in which
the vinyl alcohol-based polymer is a vinyl alcohol copolymer containing a structure represented by the following general formula (1).

[Chem. 1]

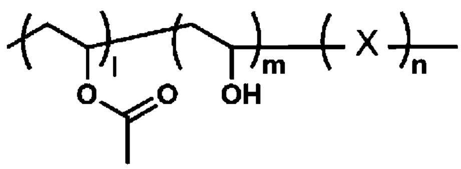

(1)

Provided that, in the general formula (1), X is a divalent hydrocarbon group having 2 to 6 carbon atoms, and l, m and n are the number of repeating units.
[8] The composite semipermeable membrane according to [7], in which
X in the general formula (1) is a divalent hydrocarbon group having 2 carbon atoms.
[9] The composite semipermeable membrane according to [8], in which
X in the general formula (1) is an ethylene group.
[10] The composite semipermeable membrane according to any one of [7] to [9], in which
the vinyl alcohol copolymer has a copolymerization ratio n/(l + m + n) of 0.035 to 0.16.
[11] The composite semipermeable membrane according to [4], in which
the alkylene glycol-based polymer has a molecular weight of 500 to 500,000.
[12] A composite semipermeable membrane module including the composite semipermeable membrane according to any one of [1] to [11].
[13] A fluid separation device including the composite semipermeable membrane module according to [12].

ADVANTAGEOUS EFFECTS OF INVENTION

According to the present invention, it is possible to provide a composite semipermeable membrane having excellent abrasion resistance and good water-permeating performance.

BRIEF DESCRIPTION OF DRAWINGS

[FIG. 1] FIG. 1 is a schematic view showing a cross-sectional structure of a composite semipermeable membrane.
[FIG. 2] FIG. 2 is a schematic view showing a structure of a composite semipermeable membrane including a

separation functional layer and a coating layer having a pleated shape, in which (a) is a partially enlarged view and (b) is an enlarged view of Y in (a).

[FIG. 3] FIG. 3 is a schematic view showing a method of an abrasion test of the composite semipermeable membrane.

[FIG. 4] FIG. 4 is an example of a graph showing a static friction force Fs (N) and a dynamic friction force Fd (N) which are measured by the abrasion test of the composite semipermeable membrane.

DESCRIPTION OF EMBODIMENTS

Hereinafter, an embodiment of the invention will be described in detail, but the invention is not limited thereto in any way.

In the present description, "mass" is synonymous with "weight".

1. Composite Semipermeable Membrane

FIG. 1 shows a first mode of a structure of a composite semipermeable membrane 1 according to the present embodiment. The composite semipermeable membrane 1 of the present invention includes a support membrane 2, a separation functional layer 3, and a coating layer 4.

(1-1) Support Membrane

The support membrane included in the composite semipermeable membrane according to the present embodiment has at least a porous support layer. The support membrane is for imparting strength to the composite semipermeable membrane, and the support membrane itself does not substantially have a solute separation performance.

The porous support layer has a large number of fine pores communicating with each other. A pore diameter and a pore diameter distribution of the fine pores are not particularly limited, and for example, it is preferable that the porous support layer has a symmetric structure having a uniform pore diameter, or an asymmetric structure in which the pore diameter gradually increases from one surface to the other surface, and the pore diameter on the surface having a smaller pore diameter is 0.1 nm to 100 nm.

As the material of the porous support layer, homopolymers or copolymers such as polysulfones (hereinafter also referred to as "PSf"), polyethersulfones, polyamides, polyesters, cellulose-based polymers, vinyl polymers, polyphenylene sulfides, polyphenylene sulfide sulfones, polyphenylene sulfones, and polyphenylene oxides can be used alone or blended for use. Examples of the cellulose-based polymer include cellulose acetate and cellulose nitrate, and examples of the vinyl polymer include polyethylene, polypropylene, polyvinyl chloride, and polyacrylonitrile. Among these, homopolymers or copolymers such as PSf, polyamides, polyesters, cellulose acetate, cellulose nitrate, polyvinyl chloride, polyacrylonitrile, polyphenylene sulfides, polyphenylene sulfide sulfones are preferable, cellulose acetate, PSf, polyphenylene sulfide sulfones, or polyphenylene sulfones are more preferable, and PSf is particularly preferable because PSf has high chemical, mechanical, and thermal stability and is easily molded.

A weight average molecular weight (hereinafter also referred to as "Mw") of PSf is preferably 10,000 to 200,000, and more preferably 15,000 to 100,000. When Mw of PSf is 10,000 or more, preferable mechanical strength and heat resistance can be obtained as a porous support layer. On the other hand, when Mw of PSf is 200,000 or less, the viscosity of a porous support layer raw liquid is in an appropriate range, and good moldability can be realized.

The support membrane may have a substrate in addition to the porous support layer.

Examples of materials of the substrate include fabrics made of polyester-based polymers, polyamide-based polymers, polyolefin-based polymers and mixtures thereof, or copolymers thereof. Among them, a fabric made of polyester-based polymers having high mechanical and thermal stability is preferable. As the form of fabric, a long-fiber nonwoven fabric or a short-fiber nonwoven fabric, or a woven knitted fabric can be preferably used.

A thickness of the support membrane influences the strength of the composite semipermeable membrane and filling density when the composite semipermeable membrane is used as an element. In order to obtain good mechanical strength and filling density, the thickness of the support membrane is preferably 50 μm to 300 μm, and more preferably 100 μm to 250 μm. When the support membrane is composed of the porous support layer and the substrate, a thickness of the porous support layer is preferably 20 μm to 100 μm. The thickness of the support membrane can be obtained by calculating an average value of thicknesses at 20 points measured at an interval of 20 μm in a direction (surface direction of the membrane) orthogonal to a thickness direction in cross-sectional observation.

(1-2) Separation Functional Layer

A separation functional layer disposed on the support membrane of the composite semipermeable membrane according to the present embodiment is a layer having a solute separation function, and contains a crosslinked polyamide.

A proportion of the crosslinked polyamide in the separation functional layer is preferably 50 mass% or more, more preferably 80 mass% or more, and still more preferably 90 mass% or more. The content of the crosslinked polyamide in the separation functional layer can be generally calculated by analysis using a nuclear magnetic resonance method.

The crosslinked polyamide is preferably a polycondensate of a polyfunctional amine and a polyfunctional acid chloride. Here, at least one of the polyfunctional amine and the polyfunctional acid chloride preferably contains a trifunctional or higher functional compound. Accordingly, a rigid molecular chain is obtained, and a good pore structure for removing fine solutes such as hydrated ions or silica is formed.

The polyfunctional amine refers to an amine having at least two primary amino groups and/or secondary amino groups in one molecule. Examples of the polyfunctional amine include aromatic trifunctional amines such as 1,3,5 -triaminobenzene and 1,2,4 -triaminobenzene, aromatic bifunctional amines such as o-phenylenediamine, m-phenylenediamine (hereinafter, also referred to as "m-PDA"), p-phenylenediamine, o-xylylenediamine, m-xylylenediamine, p-xylylenediamine, o-diaminopyridine, m-diaminopyridine, p-diaminopyridine, 3,5 - diaminobenzoic acid, 2,4 -diaminobenzenesulfonic acid, 3-aminobenzylamine, and 4-aminobenzylamine, and aliphatic bifunctional amines such as ethylenediamine, propylenediamine, 1,4 -diaminocyclohexane, piperazine, 2,5 - dimethylpiperazine, 4-aminopiperidine, and aminoethylpiperazine. These polyfunctional amines may be used alone or in combination of two or more thereof.

From the viewpoint of the separation performance, water-permeating performance, and heat resistance of the composite semipermeable membrane, the polyfunctional amine is preferably m-PDA, p-phenylenediamine, or 1,3,5 -triaminobenzene. Among them, m-PDA is particularly preferable from the viewpoint of availability and handleability.

The polyfunctional acid chloride refers to an acid chloride having at least two chlorocarbonyl groups in one molecule. Examples of the polyfunctional acid chloride include aromatic trifunctional acid chlorides such as trimesic acid chloride (hereinafter also referred to as "TMC") and trimellitic acid chloride, aliphatic trifunctional acid chlorides such as 1,3,5 -cyclohexanetricarboxylic acid trichloride, aromatic bifunctional acid chlorides such as biphenyldicarboxylic acid chloride, azobenzenedicarboxylic acid dichloride, terephthalic acid chloride, isophthalic acid chloride, and 2,6 -naphthalenedicarboxylic acid dichloride, and aliphatic bifunctional acid chlorides such as adipoyl chloride, sebacoyl chloride, and 1,4 -cyclohexanedicarboxylic acid dichloride. These polyfunctional acid chlorides may be used alone or in combination of two or more thereof.

From the viewpoint of separation performance and heat resistance of the composite semipermeable membrane, the polyfunctional acid chloride is preferably a polyfunctional aromatic acid chloride having 2 to 4 chlorocarbonyl groups in one molecule. Among them, TMC is particularly preferable from the viewpoint of availability and handleability.

(1-3) Coating Layer

A coating layer included in the composite semipermeable membrane according to the present embodiment is a layer that protects the separation functional layer, and is disposed on the separation functional layer.

The composite semipermeable membrane of the present invention has a static friction coefficient (hereinafter also referred to as "$\mu$s") between a coating layer-side surface and a lapping film abrasive having a particle size of # 2000 is 0.40 to 1.30.

The static friction coefficient is proportional to a static friction force acting to prevent an object from starting to move from a static state. When $\mu$s is 1.30 or less, the static friction force received by the composite semipermeable membrane when the composite semipermeable membrane starts to slide is reduced, and thus damage to the separation functional layer due to abrasion can be reduced. On the other hand, when $\mu$s is 0.40 or more, the composite semipermeable membrane is less likely to slip, and thus, when the composite semipermeable membrane is wound and processed into a spiral type composite semipermeable membrane element or when the composite semipermeable membrane element is operated, it is possible to prevent deformation (telescope phenomenon) of a wound body due to the composite semipermeable membrane deviating in an axial direction of the composite semipermeable membrane element. Here, $\mu$s is preferably 0.80 to 1.30, more preferably 0.95 to 1.25, and still more preferably 1.08 to 1.20.

The static friction coefficient of the composite semipermeable membrane can be controlled by, for example, a heating temperature of the support membrane brought into contact with an organic solvent solution of the polyfunctional acid chloride in a polymerization step of the separation functional layer, the material of the coating layer, and a concentration of a water-soluble polymer in an aqueous solution used for forming the coating layer.

The dynamic friction coefficient (hereinafter also referred to as "$\mu$d") between the coating layer-side surface of the composite semipermeable membrane according to the present embodiment and the lapping film abrasive having a particle size of # 2000 is preferably 0.25 to 0.73, more preferably 0.45 to 0.73, still more preferably 0.55 to 0.72, and particularly preferably 0.66 to 0.70.

The dynamic friction coefficient is proportional to a dynamic friction force that acts to prevent the movement of the object when the object is moving. When $\mu$d is 0.73 or less, the dynamic friction force received by the composite semipermeable membrane when the composite semipermeable membrane slides is reduced, and thus damage to the separation functional layer due to abrasion can be reduced. On the other hand, when $\mu$d is 0.25 or more, the composite

semipermeable membrane is less likely to slip, and thus the telescope phenomenon of the composite semipermeable membrane element can be prevented.

The dynamic friction coefficient of the composite semipermeable membrane can be controlled by, for example, a heating temperature of the support membrane brought into contact with an organic solvent solution of the polyfunctional acid chloride in a polymerization step of the separation functional layer, the material of the coating layer, and the concentration of a water-soluble polymer in an aqueous solution used for forming the coating layer.

The shapes and thicknesses of the separation functional layer and the coating layer influence the separation performance and the water-permeating performance. FIG. 2 shows a second mode of a structure of the composite semipermeable membrane 1 according to the present embodiment. As shown in (a) and (b) of FIG. 2, the separation functional layer 3 preferably has a pleated shape having a plurality of convex portions. A convex portion interior 5 (between the separation functional layer 3 and the support membrane 2) is more preferably a void. Since a surface area of the separation functional layer 3 can be made larger when the separation functional layer 3 has a pleated shape than when the separation functional layer 3 has a flat shape, the separation functional layer 3 can have high water-permeating performance while maintaining the separation performance. The coating layer 4 may be thinly formed on the separation functional layer 3 to form a pleated shape together with the separation functional layer, or may have a relatively large thickness to fill the pleated shape of the separation functional layer 3.

A shape of the coating layer-side surface of the composite semipermeable membrane (developed area ratio Sdr to be described below), a total thickness of the separation functional layer and the coating layer, and the like will be described below as an effective configuration for preventing the performance deterioration due to abrasion of the separation functional layer.

The developed area ratio (hereinafter, also referred to as "Sdr") of the coating layer-side surface of the composite semipermeable membrane of the present invention is 60% to 200%. The developed area ratio (Sdr) is a parameter representing an increase rate (%) of a developed area (surface area) of a definition region with respect to an area of the definition region. A smaller value indicates a surface shape closer to flatness, and Sdr of a completely flat surface is 0%. On the other hand, a larger value indicates a shape of the surface with more irregularities. When Sdr is 60% or more, the surface area of the composite semipermeable membrane is large, and thus a composite semipermeable membrane having good water-permeating performance can be obtained. However, when Sdr is 60% or more, that is, the number of irregularities on a surface of the separation functional layer increases, the convex portions of the separation functional layer are easily damaged by abrasion, and thus the abrasion resistance of the composite semipermeable membrane usually decreases. The present inventors have found that even when Sdr is set to 60% to 200%, a composite semipermeable membrane having good abrasion resistance can be obtained by setting a static friction coefficient $\mu s$ between the coating layer-side surface of the composite semipermeable membrane and the lapping film abrasive having a particle size of # 2000 to 0.40 to 1.30. Sdr is preferably 70% to 180%, and more preferably 80% to 150%.

The developed area ratio of the composite semipermeable membrane can be controlled by, for example, a heating temperature of the support membrane brought into contact with an organic solvent solution of the polyfunctional acid chloride in the polymerization step of the separation functional layer, and the concentration of the water-soluble polymer in the aqueous solution used for forming the coating layer.

A root mean square height (hereinafter also referred to as "Sq") of the coating layer-side surface of the composite semipermeable membrane according to the present embodiment is preferably 140 nm to 300 nm, more preferably 145 nm to 270 nm, and still more preferably 150 nm to 240 nm. When Sq is 140 nm or more, a composite semipermeable membrane having good water-permeating performance can be obtained in proportion to a large surface area of the composite semipermeable membrane. On the other hand, when Sq is 300 nm or less, a composite semipermeable membrane having good abrasion resistance can be obtained.

The root mean square height of the coating layer-side surface of the composite semipermeable membrane can be controlled by, for example, a heating temperature of the support membrane brought into contact with an organic solvent solution of the polyfunctional acid chloride in the polymerization step of the separation functional layer, and the concentration of the water-soluble polymer in the aqueous solution used for forming the coating layer.

A total thickness T of the separation functional layer and the coating layer is preferably 10 nm to 100 nm, more preferably 11 nm to 70 nm, and still more preferably 11 nm to 20 nm. When the total thickness T of the separation functional layer and the coating layer is 10 nm or more, a composite semipermeable membrane exhibiting good separation performance and abrasion resistance can be obtained. On the other hand, when the total thickness T of the separation functional layer and the coating layer is 100 nm or less, a composite semipermeable membrane having good water-permeating performance can be obtained. As shown in (b) of FIG. 2, the "total thickness T" means a thickness from the convex portion interior 5 to the outside in a case where the separation functional layer 3 and the coating layer 4 overlap and are integrated and the separation functional layer and the coating layer have a pleated shape constituting a plurality of hollow convex portions.

In order to prevent a substance to be separated from penetrating into the composite semipermeable membrane, the separation functional layer and the coating layer are preferably disposed on a filtration primary side.

The coating layer included in the composite semipermeable membrane according to the present embodiment preferably contains a water-soluble polymer. Here, the "water-soluble polymer" means a polymer that dissolves in water at 25°C in an amount of 0.5 mass% or more. A proportion of the water-soluble polymer in the coating layer is preferably 50 mass% or more, more preferably 60 mass% or more, and still more preferably 70 mass% or more. By including the water-soluble polymer, the coating layer can be easily formed on the separation functional layer using a water-soluble polymer aqueous solution in a "(2-3) coating layer formation step" to be described later. In addition, since the water-soluble polymer generally has excellent hydrophilicity and can prevent a decrease in water-permeating performance due to the coating layer, a composite semipermeable membrane having sufficient water-permeating performance can be obtained.

A proportion of the water-soluble polymer in the coating layer can be generally calculated by analysis using a nuclear magnetic resonance method.

Examples of the water-soluble polymer include synthetic polymers and copolymers thereof such as polyacrylic acid, polymethacrylic acid, polyvinylpyrrolidone, vinyl alcohol-based polymers, polyethyleneimine, polyallylamine, polyacrylamide, poly (N-isopropylacrylamide), polyacryloylmorpholine, poly (2-ethyl-2-oxazoline), alkylene glycol-based polymers, polyvinylimidazole, and polystyrene sulfonic acid, cellulose derivatives such as carboxymethyl cellulose, hydroxyethyl cellulose, and methyl cellulose, proteins such as gelatin and casein, and starches such as dextrin and etherified starch. These water-soluble polymers may be used alone or in combination of two or more thereof.

From the viewpoint of separation performance, water-permeating performance, and abrasion resistance of the composite semipermeable membrane, the water-soluble polymer is preferably at least one of a vinyl alcohol-based polymer and an alkylene glycol-based polymer, and more preferably a vinyl alcohol-based polymer. By coating the composite semipermeable membrane with the coating layer containing at least one of the vinyl alcohol-based polymer and the alkylene glycol-based polymer, damage due to abrasion of the separation functional layer can be prevented. In addition, since hydroxyl groups of the vinyl alcohol-based polymer form a hydrogen bond with the crosslinked polyamide of the composite semipermeable membrane, the coating layer containing the vinyl alcohol-based polymer is hardly peeled from the crosslinked polyamide, and is suitable for protecting the crosslinked polyamide from abrasion. Accordingly, abrasion resistance can be imparted to the composite semipermeable membrane.

A degree of saponification of the vinyl alcohol-based polymer contained in the coating layer according to the present embodiment is preferably 96 mol% or more, and more preferably 98 mol% or more. When the degree of saponification of the vinyl alcohol-based polymer is 96 mol% or more, the vinyl alcohol-based polymer has a larger number of hydroxyl groups and forms a strong hydrogen bond with the crosslinked polyamide of the composite semipermeable membrane, so that excellent abrasion resistance can be imparted to the composite semipermeable membrane.

A degree of polymerization of the vinyl alcohol-based polymer contained in the coating layer according to the present embodiment is preferably 100 to 1,500, and more preferably 200 to 1,200. When the degree of polymerization of the vinyl alcohol-based polymer is 100 or more, a coating layer having a sufficient thickness can be provided, and a composite semipermeable membrane having excellent abrasion resistance can be obtained. On the other hand, when the degree of polymerization of the vinyl alcohol-based polymer is 1,500 or less, the permeation resistance due to the thickness of the coating layer can be prevented, and a composite semipermeable membrane having sufficient water-permeating performance can be obtained. By setting the degree of polymerization within the above range, the vinyl alcohol-based polymer has sufficient water solubility, and the coating layer can be easily formed on the separation functional layer using a vinyl alcohol-based polymer aqueous solution in the "(2-3) coating layer formation step" to be described later.

The vinyl alcohol-based polymer may be a polyvinyl alcohol having only a hydroxyl group or an acetate group as a functional group (hereinafter, also referred to as "PVA"), and may have other functional groups. Examples of the vinyl alcohol-based polymer having a functional group other than a hydroxyl group and an acetate group include a modified PVA in which the hydroxyl group is modified with a carbonyl group such as a carboxy group or an acetoacetyl group, vinylpyrrolidone, and a vinyl alcohol copolymer obtained by copolymerizing an olefin unit or the like. Among them, a vinyl alcohol copolymer containing a structure represented by the following general formula (1) (hereinafter, also simply referred to as a "vinyl alcohol copolymer") is particularly preferable.

[Chem. 2]

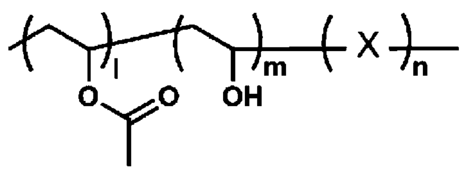

(1)

In the general formula (1), X is a divalent hydrocarbon group having 2 to 6 carbon atoms, and l, m and n are the

number of repeating units.

The vinyl alcohol copolymer may contain another structure other than the structure represented by the above general formula (1). A proportion of the structure represented by the general formula (1) in the vinyl alcohol copolymer is preferably 60 mass% or more, more preferably 70 mass% or more, still more preferably 80 mass% or more, and particularly preferably composed of only the structure represented by the general formula (1). The proportion of the structure represented by the general formula (1) in the vinyl alcohol copolymer can be generally calculated by analysis using a nuclear magnetic resonance method.

The vinyl alcohol copolymer containing the structure represented by the above general formula (1) also exhibits hydrophobic interaction between hydrocarbon groups in addition to intermolecular hydrogen bonds between hydroxyl groups shown by PVA. Accordingly, since the intermolecular interaction is stronger than that of PVA, the higher-order structure is less likely to change, and the hydrogen bond with the crosslinked polyamide is likely to be maintained. In addition, it is known that the vinyl alcohol copolymer represented by the general formula (1) forms a film having excellent smoothness and a small friction coefficient as compared with PVA. Therefore, by using the vinyl alcohol copolymer in the coating layer, a composite semipermeable membrane having a low risk of deterioration due to abrasion and good abrasion resistance can be obtained.

In the general formula (1), examples of the divalent hydrocarbon group having 2 to 6 carbon atoms of X include an ethylene group ($-CH_2CH_2-$), an ethylidene group ($-CH(CH_3)-$), a vinylene group ($-CH = CH-$), a trimethylene group ($-CH_2CH_2CH_2-$), a propylene group ($-CH(CH_3)CH_2-$), a tetramethylene group ($-CH_2(CH_2)_2CH_2-$), a cyclopentylene group, and a hexamethylene group ($-CH_2 (CH_2)_4CH_2-$). X in the general formula (1) is preferably a divalent hydrocarbon group having 2 carbon atoms. When X in the general formula (1) is a divalent hydrocarbon group having 2 carbon atoms, the vinyl alcohol copolymer has sufficient water solubility, and the coating layer can be easily formed on the separation functional layer using a vinyl alcohol copolymer aqueous solution in the "(2-3) coating layer formation step" to be described later. X in the general formula (1) is preferably a divalent saturated hydrocarbon group having 2 to 6 carbon atoms. When X in the general formula (1) is a divalent saturated hydrocarbon group having 2 to 6 carbon atoms, a coating layer that is hardly deteriorated by oxidation or the like can be formed. Among them, from the viewpoint of availability, X in the general formula (1) is particularly preferably an ethylene group.

A copolymerization ratio $n/(l + m + n)$ of the vinyl alcohol copolymer containing the structure represented by the general formula (1) is preferably 0.035 to 0.16, more preferably 0.040 to 0.11, and still more preferably 0.042 to 0.095. When the copolymerization ratio is 0.035 or more, the vinyl alcohol copolymer exhibits strong intermolecular interaction by sufficient hydrophobic interaction, and a composite semipermeable membrane having good abrasion resistance can be obtained. On the other hand, when the copolymerization ratio is 0.16 or less, the vinyl alcohol copolymer has sufficient water solubility, and a coating layer can be easily formed on the separation functional layer using the vinyl alcohol copolymer aqueous solution in the "(2-3) coating layer formation step" to be described later. The copolymerization ratio can be generally calculated by analysis using a nuclear magnetic resonance method.

A degree of polymerization $l + m + n$ of the vinyl alcohol copolymer is preferably 100 to 1,500, and more preferably 200 to 1,200. When the degree of polymerization of the vinyl alcohol copolymer is 100 or more, a coating layer having a sufficient thickness can be provided, and a composite semipermeable membrane having excellent abrasion resistance can be obtained. On the other hand, when the degree of polymerization of the vinyl alcohol copolymer is 1,500 or less, the permeation resistance due to the thickness of the coating layer can be prevented, and a composite semipermeable membrane having sufficient water-permeating performance can be obtained. In addition, when the degree of polymerization is within the above range, the vinyl alcohol copolymer has sufficient water solubility, and a coating layer can be easily formed on the separation functional layer using the vinyl alcohol copolymer aqueous solution in the "(2-3) coating layer formation step" to be described later.

A molecular weight of the alkylene glycol-based polymer contained in the coating layer according to the present embodiment is preferably 500 to 500,000, more preferably 700 to 100,000, and still more preferably 800 to 10,000. When the degree of polymerization of the alkylene glycol-based polymer is 500 or more, a coating layer having a sufficient thickness can be provided, and a composite semipermeable membrane having excellent abrasion resistance can be obtained. On the other hand, when the degree of polymerization of the alkylene glycol-based polymer is 500,000 or less, a decrease in water-permeating performance due to the thickness of the coating layer can be prevented, and a composite semipermeable membrane having sufficient water-permeating performance can be obtained.

The alkylene glycol-based polymer preferably has a functional group capable of reacting with a functional group of the crosslinked polyamide, such as a carboxy group, an amino group, an acetoacetyl group, or a glycidyl group, at a terminal. When the alkylene glycol-based polymer has these functional groups at the terminal, a coating layer can be easily formed on the separation functional layer using the alkylene glycol-based polymer aqueous solution.

The water-soluble polymer contained in the coating layer is preferably insolubilized so as not to be eluted when the composite semipermeable membrane is used. Examples of a method of insolubilizing a water-soluble polymer of a coating layer include a method of forming a non-covalent bond such as a hydrogen bond or an ionic bond between the water-soluble polymer and the crosslinked polyamide and immobilizing the non-covalent bond on the separation

functional layer, a method of forming a covalent bond by a reaction between the crosslinked polyamide and a functional group, crosslinking by a crosslinking agent, or the like and immobilizing the covalent bond on the separation functional layer, and a method of forming a covalent bond by crosslinking by a crosslinking agent between water-soluble polymers and insolubilizing the water-soluble polymer as a three-dimensional structure. Among them, from the viewpoint that stable operation can be continued over a long period of time, a method of forming a covalent bond by a reaction between functional groups of the water-soluble polymer and the crosslinked polyamide, crosslinking by a crosslinking agent, or the like and fixing the covalent bond on the separation functional layer is more preferable.

(1-4) NaCl Removal Rate, Membrane Permeation Flux

A NaCl removal rate of the composite semipermeable membrane according to the present embodiment is preferably 99.55% or more, more preferably 99.65% or more, and still more preferably 99.75% or more. A membrane permeation flux during production of the composite semipermeable membrane is preferably 1.00 m/d or more, more preferably 1.15 m/d or more, and still more preferably 1.30 m/d or more. When the membrane performance of the composite semipermeable membrane is within the above range, the composite semipermeable membrane can be preferably used as a separation membrane for separation of salts and the like.

A NaCl removal rate of the composite semipermeable membrane after the abrasion test is preferably 99.25% or more, more preferably 99.35% or more, and still more preferably 99.40% or more. When the membrane performance of the composite semipermeable membrane after the abrasion test is within the above range, the composite semipermeable membrane can be preferably used as a composite semipermeable membrane having excellent abrasion resistance. An abrasion test method is as described in "(3) abrasion test and friction coefficient" to be described later.

2. Method for Producing Composite Semipermeable Membrane

A method for producing a composite semipermeable membrane according to the present embodiment is not particularly limited as long as a composite semipermeable membrane that satisfies the above-described desired characteristics can be obtained, and the composite semipermeable membrane can be produced, for example, by the following method.

(2-1) Formation of Support Membrane

As a method for forming a support membrane, a known method can be suitably used. Hereinafter, a case where PSf is used as the material of the porous support layer will be described as an example.

First, PSf is dissolved in a good solvent of PSf to prepare a porous support layer raw liquid. As the good solvent of PSf, for example, N, N-dimethylformamide (hereinafter, referred to as "DMF") is preferable.

A concentration of PSf in the porous support layer raw liquid is preferably 10 mass% to 25 mass%, and more preferably 12 mass% to 20 mass%. When the concentration of PSf in the porous support layer raw liquid is within the above range, it is possible to achieve both the strength and the water-permeating performance of the obtained porous support layer. A preferable range of a concentration of the material in the porous support layer raw liquid can be appropriately adjusted according to the material to be used, the good solvent, and the like.

Next, the obtained porous support layer raw liquid is applied to a surface of the substrate, and is immersed in a coagulation bath containing a non-solvent of PSf.

The non-solvent of PSf contained in the coagulation bath is preferably water, for example. By bringing the porous support layer raw liquid applied on the surface of the substrate into contact with the coagulation bath containing the non-solvent of PSf, the porous support layer raw liquid is solidified by the non-solvent induced phase separation, and a support membrane in which a porous support layer is formed on the surface of the substrate can be obtained.

The coagulation bath may be composed of only the non-solvent of PSf, or may contain the good solvent of PSf within a range in which the porous support layer raw liquid can be coagulated.

The solvent remaining in the support membrane may be removed by washing the obtained support membrane before forming the separation functional layer.

(2-2) Polymerization Step of Separation Functional Layer

Next, a separation functional layer containing a crosslinked polyamide is formed on a support membrane.

As a method for forming a separation functional layer containing a crosslinked polyamide, a method for polymerizing and solidifying a polyfunctional amine and a polyfunctional acid chloride on the support membrane obtained in "(2-1) formation of support membrane" will be described as an example. As a polymerization method, an interfacial polymerization method is most preferable from the viewpoint of productivity and performance. An interfacial polymerization step is described below.

The interfacial polymerization step includes (a) a step of bringing an aqueous solution containing a polyfunctional amine into contact with a support membrane, (b) a step of bringing an organic solvent solution containing a polyfunctional acid chloride into contact with the support membrane which has been brought into contact with the aqueous solution containing a polyfunctional amine, (c) a step of draining the organic solvent solution after the contact, and (d) a step of washing, with hot water, the composite semipermeable membrane obtained by draining the organic solvent solution.

In the step (a), the aqueous solution contains at least a polyfunctional amine. Examples of the polyfunctional amine include the polyfunctional amine exemplified in "(1-2) separation functional layer".

A concentration of the polyfunctional amine in the aqueous solution is preferably 0.1 mass% to 20 mass%, more preferably 0.5 mass% to 15 mass%, and still more preferably 1.0 mass% to 10 mass%. When the concentration of the polyfunctional amine is 0.1 mass% or more, a separation functional layer having a solute separation performance can be formed. On the other hand, when the concentration of the polyfunctional amine is 20 mass% or less, a separation functional layer having good water-permeating performance can be formed.

The aqueous solution may contain a compound such as a surfactant and an antioxidant as necessary as long as the polymerization is not inhibited.

The aqueous solution is preferably brought into contact with the support membrane uniformly and continuously. Specific examples thereof include a method for coating a support membrane with a polyfunctional amine aqueous solution, and a method for immersing a support membrane in an aqueous solution. A contact time between the support membrane and the aqueous solution is preferably 1 second to 10 minutes, and more preferably 3 seconds to 3 minutes.

After the aqueous solution is brought into contact with the support membrane, it is preferable to sufficiently drain liquid such that no droplet remains on the support membrane. By sufficiently draining liquid, it is possible to prevent droplet residue from becoming a membrane defect after separation functional layer formation and deteriorating separation performance. Examples of a liquid draining method include, a method for holding the support membrane in a vertical direction after the contact with the aqueous solution and allowing the excess aqueous solution to naturally flow down, or a method for forcibly draining solution by blowing an air flow such as nitrogen from an air nozzle. In addition, after the liquid draining, the membrane surface may be dried to partially remove water from the aqueous solution.

In the step (b), examples of the polyfunctional acid chloride include the polyfunctional acid chlorides exemplified in "(1-2) separation functional layer".

The organic solvent is preferably immiscible with water, dissolves the polyfunctional acid chloride, does not erode the support membrane, and is inactive to the polyfunctional amine and the polyfunctional acid chloride. Examples of the organic solvent include hydrocarbon compounds such as n-nonane, n-decane, n-undecane, n-dodecane, isooctane, isodecane, and isododecane, and mixed solvents thereof.

A concentration of the polyfunctional acid chloride in the organic solvent solution is preferably 0.01 mass% to 10 mass%, more preferably 0.02 mass% to 4 mass%, and still more preferably 0.03 mass% to 2 mass%. When the concentration of the polyfunctional acid chloride is 0.01 mass% or more, the polymerization can proceed at a sufficient reaction rate. On the other hand, when the concentration of the polyfunctional acid chloride is 10 mass% or less, a side reaction during polymerization can be prevented. The organic solvent solution may contain a compound such as a surfactant as necessary as long as the polymerization is not inhibited.

The organic solvent solution of the polyfunctional acid chloride is preferably brought into contact with the support membrane, which has been brought into contact with the polyfunctional amine aqueous solution, uniformly and continuously. Specifically, for example, a method for coating a support membrane which has been brought into contact with a polyfunctional amine aqueous solution with an organic solvent solution of a polyfunctional acid chloride is exemplified. A contact time between the support membrane which has been brought into contact with the polyfunctional amine aqueous solution and the organic solvent solution of the polyfunctional acid chloride is preferably 3 seconds to 10 minutes, and more preferably 5 seconds to 3 minutes.

If necessary, the support membrane which has been brought into contact with the organic solvent solution of polyfunctional acid chloride may be heat-treated. In the case of heat treatment, a heating temperature is preferably 35°C to 180°C, more preferably 50°C to 160°C, still more preferably 60°C to 150°C. The heating time varies depending on the temperature of the membrane surface as a reaction field, and is preferably 5 seconds or longer, more preferably 10 seconds or longer.

In the step (c), the organic solvent solution on the composite semipermeable membrane after the polymerization reaction is removed by draining. Examples of the liquid draining method include a method of holding a membrane in a vertical direction to remove an excess organic solvent solution by allowing the excess organic solvent solution to naturally flow down, a method of drying and removing an organic solvent by blowing air with a blower, or a method of removing an excess organic solvent solution with a mixed fluid of water and air.

In step (d), the composite semipermeable membrane from which the organic solvent is removed is washed with hot water. A temperature of the hot water is preferably 40°C to 95°C, and more preferably 60°C to 95°C. When the temperature of the hot water is 40°C or higher, unreacted substances and oligomers remaining in the membrane can be

sufficiently removed. On the other hand, when the temperature of the hot water is 95°C or lower, a shrinkage degree of the composite semipermeable membrane does not increase, and good water-permeating performance can be maintained. A preferred range of the temperature of the hot water can be appropriately adjusted according to the polyfunctional amine or the polyfunctional acid chloride to be used.

(2-3) Coating Layer Formation Step

Next, a coating layer is formed on the separation functional layer.

As a method of forming a coating layer on a separation functional layer, a method in which the water-soluble polymer is crosslinked with the crosslinked polyamide contained in the separation functional layer obtained in the "(2-2) polymerization step of separation functional layer" to insolubilize the water-soluble polymer will be described as an example.

The coating layer formation step includes (e) a step of bringing an aqueous solution containing a water-soluble polymer and a crosslinking agent on a separation functional layer into contact with the separation functional layer, (f) a step of crosslinking the water-soluble polymer with the crosslinked polyamide and immobilizing the water-soluble polymer on the separation functional layer, (g) a step of draining an excess aqueous solution, and (h) a step of washing a composite semipermeable membrane.

In the step (e), the aqueous solution contains a water-soluble polymer and a crosslinking agent. Examples of the water-soluble polymer include the water-soluble polymer exemplified in "(1-3) coating layer".

A concentration of the water-soluble polymer in the aqueous solution is preferably 0.3 mass% to 10 mass%, more preferably 0.35 mass% to 8 mass%, and still more preferably 0.4 mass% to 5 mass%. When the concentration of the water-soluble polymer is 0.3 mass% or more, a coating layer having a sufficient thickness can be provided, and a composite semipermeable membrane having excellent abrasion resistance can be obtained. On the other hand, when the concentration of the water-soluble polymer is 10 mass% or less, the thickness of the coating layer is not too thick, and a composite semipermeable membrane having sufficient water-permeating performance can be obtained.

The "crosslinking agent" means a compound that reacts with a functional group of the water-soluble polymer and a functional group of the crosslinked polyamide to form a covalent bond with each other. When a vinyl alcohol-based polymer is used as the water-soluble polymer, examples of the crosslinking agent include polyvalent aldehydes such as succinaldehyde, glutaraldehyde, and terephthalaldehyde.

A concentration of the crosslinking agent in the aqueous solution is preferably 0.01 mass% to 5 mass%, more preferably 0.02 mass% to 1 mass%, and still more preferably 0.05 mass% to 0.5 mass%. When the concentration of the crosslinking agent is 0.01 mass% or more, the water-soluble polymer and the crosslinked polyamide form a covalent bond, and the water-soluble polymer can be insolubilized. On the other hand, when the concentration of the crosslinking agent is 5 mass% or less, the rapid progress of the crosslinking reaction can be prevented, and a uniform coating layer can be formed.

The aqueous solution may contain a compound such as a catalyst as necessary. When a vinyl alcohol-based polymer is used as the water-soluble polymer and a polyvalent aldehyde is used as the crosslinking agent, examples of the catalyst include inorganic acids such as hydrochloric acid and sulfuric acid.

The aqueous solution is preferably brought into contact with the separation functional layer uniformly and continuously. Specifically, for example, a method of coating a separation functional layer with an aqueous solution is exemplified. A contact time between the separation functional layer and the aqueous solution is preferably 5 seconds to 10 hours, and more preferably 10 seconds to 1 hour.

In the step (f), the water-soluble polymer is crosslinked with the crosslinked polyamide of the separation functional layer to be insolubilized. A crosslinking method can be appropriately selected depending on the water-soluble polymer and the crosslinking agent to be used. When a vinyl alcohol-based polymer is used as the water-soluble polymer and a polyvalent aldehyde is used as the crosslinking agent, the crosslinking method is preferably thermal crosslinking. Examples of the thermal crosslinking method include a method of heating the aqueous solution and the composite semipermeable membrane by blowing hot air with a blower. A temperature of the hot air is preferably 30°C to 120°C, and more preferably 40°C to 80°C. When the temperature of the hot air is 30°C or higher, the water-soluble polymer and the crosslinked polyamide form a covalent bond, and the water-soluble polymer can be insolubilized. On the other hand, when the temperature of the hot air is 120°C or lower, the rapid progress of the crosslinking reaction can be prevented, a uniform coating layer can be formed, the shrinkage degree of the composite semipermeable membrane does not increase, and good water-permeating performance can be maintained.

In step (g), the aqueous solution on the composite semipermeable membrane after the crosslinking reaction is removed by draining. Examples of the liquid draining method include a method of holding a membrane in a vertical direction and removing an excess aqueous solution by allowing the excess aqueous solution to naturally flow down, and a method of drying and removing an aqueous solvent by blowing air with a blower.

In the step (h), the composite semipermeable membrane from which the aqueous solution is removed is washed

with water. A temperature of water used for washing is preferably 15°C to 70°C, and more preferably 20°C to 50°C. When the temperature of the water is 15°C or higher, unreacted materials, catalysts, and the like remaining in the composite semipermeable membrane can be sufficiently removed. On the other hand, when the temperature of the hot water is 70°C or lower, the shrinkage degree of the composite semipermeable membrane does not increase, and good water-permeating performance can be maintained. A preferred range of the temperature of the water can be appropriately adjusted depending on a type of a water-soluble polymer or crosslinking agent to be used.

If necessary, the composite semipermeable membrane may be subjected to hydrophilization treatment. Examples of a hydrophilization treatment method include a method of bringing a surfactant aqueous solution such as polyoxyethylene octylphenyl ether or sodium n-dodecylbenzenesulfonate or an alcohol aqueous solution such as methanol, ethanol, or isopropanol into contact with a composite semipermeable membrane.

3. Use of Composite Semipermeable Membrane

The composite semipermeable membrane according to the present embodiment may be wound around a tubular water collection pipe in which a large number of holes are bored together with a feed water channel material such as a plastic net, a permeate channel material such as a tricot, and a film for increasing pressure resistance as necessary, to be suitably used as a spiral type composite semipermeable membrane element. Furthermore, a composite semipermeable membrane module in which these elements are connected in series or in parallel and accommodated in a pressure vessel may also be provided.

The composite semipermeable membrane, the element thereof, and the module can constitute a fluid separation device in combination with a pump that supplies feed water thereto, a device that subjects the feed water to pretreatment, and the like. By using the fluid separation device, the feed water can be separated into permeated water such as drinking water and concentrated water that does not permeate through the membrane to obtain intended water.

Examples of the feed water to be treated by the composite semipermeable membrane according to the present embodiment include a liquid mixture containing 500 mg/L to 100 g/L of total dissolved solids (TDS) such as seawater, brackish water, and wastewater. In general, TDS indicates an amount of the total dissolved solids, and is represented by "mass/volume" or "mass ratio". According to the definition, the total dissolved solids can be calculated from a weight of residue obtained by evaporating, at a temperature of 39.5°C to 40.5°C, a solution filtered through a filter of 0.45 microns and is more conveniently converted from practical salinity (S).

As an operation pressure of the fluid separation device increases, a solute removal rate increases but energy required for operation also increases. In addition, in consideration of durability of the composite semipermeable membrane, the operation pressure when water to be treated permeates through the composite semipermeable membrane is preferably 0.5 MPa to 10 MPa. The solute removal rate decreases as a temperature of the feed water increases, but the water-permeating performance decreases as the temperature of the feed water decreases. Therefore, the temperature of the feed water is preferably 5°C to 45°C. In the case of feed water having a high solute concentration such as seawater, when the pH of the feed water becomes high, scale such as magnesium may be generated. Since there is concern about deterioration of the composite semipermeable membrane due to operation under a high pH condition, an operate in a neutral region is preferable.

Examples

Hereinafter, the present invention will be described with reference to specific examples, but the present invention is not limited to these examples.

Physical properties of the composite semipermeable membrane of the present invention were measured by the following method.

(1) Membrane Permeation Flux

Evaluation water (hereinafter, also referred to as "evaluation water") prepared to a NaCl concentration of 2,000 mg/L, 25°C, and pH 7 with respect to a composite semipermeable membrane having a diameter of 75 mm was supplied at an operation pressure of 1.55 MPa, and after operation for 2 hours, permeated water was collected for 15 minutes. An amount of permeated water ($m^3$) was measured and converted into a numerical value per unit membrane area ($m^2$) and unit time (d) to calculate the membrane permeation flux (m/d).

(2) NaCl Removal Rate

In a membrane filtration test of "(1) membrane permeation flux", the electric conductivity of the evaluation water and the permeated water was measured with a multi-water quality meter (manufactured by DKK-TOA CORPORATION,

MM-60R), and the NaCl concentration (practical salinity) of each of the evaluation water and the permeated water was measured. The NaCl removal rate (%) was calculated from the obtained NaCl concentration based on the following formula (1). A value rounded to the third decimal place was used.

NaCl removal rate (%) = 100 × {1 - (NaCl concentration in permeated water/NaCl concentration in evaluation water)} Formula (1)

(3) Abrasion Test and Friction Coefficient

The abrasion test was performed as follows.

The composite semipermeable membrane was cut into a corner of 10 cm × 10 cm and washed with distilled water at 70°C for 5 minutes. The washed composite semipermeable membrane was attached to a 2.09 kg (20.5 N) rectangular parallelepiped (bottom face corner of 12 cm × 13 cm) weight such that the coating layer or the separation functional layer was on a front side, and the membrane surface was drained by blowing a nitrogen stream from an air nozzle. In addition, a lapping film abrasive (manufactured by Trusco Nakayama Corporation; TLF-2000, particle size # 2000) was attached to a flat metal plate so that the polished surface was on a front side. As shown in FIG. 3, a weight 8 was placed on a composite semipermeable membrane 9 so that an entire coating layer or separation functional layer of the composite semipermeable membrane 9 was in contact with a polished surface of a lapping film abrasive 10 attached onto a metal plate 11. A string was attached to one side of the weight 8 in the axial direction (horizontal direction), and the other side of the string was connected to a tensile tester 6 (RTG-1210 manufactured by A&D Company, Limited). A pulley 7 was interposed between the weight 8 and the tensile tester 6 so that the string was bent perpendicularly. The weight 8 was pulled together with the composite semipermeable membrane 9 by the tensile tester 6 under the following conditions.

Tensile speed: 100 mm/min
Tensile distance: 120 mm
Measurement room temperature: 25°C

As shown in FIG. 4, a maximum load in the abrasion test was defined as a static friction force Fs (N), and an average load up to the first 60 mm after the start of the relative displacement movement between the contact surfaces was defined as a dynamic friction force Fd (N).

The same measurement was repeated five times after replacing the composite semipermeable membrane, and the static friction coefficient μs and a dynamic friction coefficient μd were calculated from average values of the static friction force Fs (N) and the dynamic friction force Fd (N) and a load Fp (N) of the weight based on the following formulas (2) and (3).

$$\mu s = Fs/Fp \quad \text{Formula (2)}$$

$$\mu d = Fd/Fp \quad \text{Formula (3)}$$

In addition, using the composite semipermeable membrane subjected to the abrasion test, a NaCl removal rate (%) after the abrasion test was calculated by the method described in the "(2) NaCl removal rate". The measurement was performed on all five sheets subjected to the abrasion test, and an average value was defined as the NaCl removal rate after the abrasion test.

(4) Total Thickness T of Separation Functional Layer and Coating Layer

The composite semipermeable membrane was cut into a corner of 3 cm × 3 cm and immersed with distilled water at 25°C for 24 hours. The composite semipermeable membrane after immersion was embedded in an epoxy resin, dyed with osmium tetroxide, and cut into an ultrathin section using a microtome to prepare a measurement sample. The obtained sample was observed using a scanning transmission electron microscope (manufactured by Hitachi, Ltd.; HD 2700) with a composite semipermeable membrane cross-section as an observation surface. A shortest distance from a certain point on an outer surface of the separation functional layer or the coating layer to an inner surface was measured using the acquired image at a magnification of 1,000,000 times. With respect to 10 randomly selected convex portions, five points were measured for each convex portion, and an average value of the points was defined as the total thickness T (nm) of the separation functional layer and the coating layer.

(5) Developed Area Ratio Sdr and Root Mean Square Height Sq

The composite semipermeable membrane was cut into a corner of 3 cm × 3 cm and immersed with distilled water at 25°C for 24 hours. The composite semipermeable membrane after immersion was observed using an atomic force microscope (Dimension FastScan manufactured by Bruker) under the following conditions in a wet state with distilled water with the coating layer or the separation functional layer disposed on the surface as a measurement surface. A developed area ratio and a root mean square height were calculated in accordance with surface properties (surface roughness measurement) of ISO 25178: 2014 at randomly selected 10 points, and average values thereof were taken as the developed area ratio Sdr (%) and the root mean square height Sq (nm).

Scanning mode: nano-mechanical mapping in water
Probe: silicon cantilever (Scan Asyst-Fluid manufactured by Bruker)
Maximum load: 5 nN
Scanning range: 10 μm × 10 μm
Scanning speed: 1 Hz
Number of pixels: 512 × 512
Measurement environment: in distilled water
Measurement temperature: 25°C

(6) Weight Average Molecular Weight

The weight average molecular weight (in terms of polystyrene) of PSf was measured using gel permeation chromatography (manufactured by Tosoh Corporation; HLC-8022). Specific measurement conditions are as follows.

Column: two TSK gel SuperHM-H (manufactured by Tosoh Corporation; inner diameter: 6.0 mm, length: 15 cm)
Eluent: LiBr/N-methylpyrrolidone solution (10 mM)
Sample concentration: 0.1 mass%
Flow rate: 0.5 mL/min
Temperature: 40°C

The raw materials of the composite semipermeable membranes used in Examples and Comparative Examples are summarized below.

PSf (manufactured by Solvay Specialty Polymers Japan K.K.; Udel P-3500, Mw 80,000)
DMF (manufactured by FUJIFILM Wako Pure Chemical Corporation)
Polyester filament nonwoven fabric (thickness: 90 μm, density: 0.42 g/$cm^3$)
m-PDA (manufactured by FUJIFILM Wako Pure Chemical Corporation)
TMC (manufactured by FUJIFILM Wako Pure Chemical Corporation)
n-decane (manufactured by FUJIFILM Wako Pure Chemical Corporation)
Sodium nitrite (manufactured by FUJIFILM Wako Pure Chemical Corporation)
Sodium sulfite (manufactured by FUJIFILM Wako Pure Chemical Corporation)
Sulfuric acid (manufactured by FUJIFILM Wako Pure Chemical Corporation)
Polyacrylic acid (manufactured by FUJIFILM Wako Pure Chemical Corporation, Mw 25, 000)
4-(4 ,6-dimethoxy-1,3,5 -triazine-2-yl) -4 -methylmorpholinium chloride (hereinafter also referred to as "DMT-MM") (manufactured by FUJIFILM Wako Pure Chemical Corporation)
PVA 1 (manufactured by Sigma-Aldrich; degree of saponification: 99.5 mol%, degree of polymerization: 2,600)
PVA 2 (manufactured by Sigma-Aldrich; degree of saponification: 98.0 mol% to 99.0 mol%, degree of polymerization: 900)
Vinyl alcohol copolymer 1 (manufactured by Kuraray Co., Ltd.; Exceval RS-2117, degree of saponification: 97.5 mol% to 99.0 mol%, degree of polymerization: 1,700, ethylene copolymerization ratio: 0.030)
Vinyl alcohol copolymer 2 (manufactured by Kuraray Co., Ltd.; Exceval AQ-4104, degree of saponification: 98.0 mol% to 99.0 mol%, degree of polymerization: 400, ethylene copolymerization ratio: 0.059)
Vinyl alcohol copolymer 3 (manufactured by Kuraray Co., Ltd.; Exceval HR-3010, degree of saponification: 99.0 mol% to 99.4 mol%, degree of polymerization: 1,000, ethylene copolymerization ratio: 0.045)
Vinyl alcohol copolymer 4 (manufactured by Kuraray Co., Ltd.; Exceval RS-1717, degree of saponification: 92.0 mol% to 94.0 mol%, degree of polymerization: 1,700, ethylene copolymerization ratio: 0.028)
Glutaraldehyde (manufactured by FUJIFILM Wako Pure Chemical Corporation)
Isopropanol (manufactured by FUJIFILM Wako Pure Chemical Corporation)

Alkylene glycol-based polymer 1 (manufactured by Nagase ChemteX Corporation; DENACOL EX-171, molecular weight: 900)
Alkylene glycol-based polymer 2 (manufactured by Nagase ChemteX Corporation; DENACOL EX-861, molecular weight: 1100)

[Comparative Example 1]

PSf 15 mass% and DMF 85 mass% were dissolved at 100°C to prepare a porous support layer raw liquid. This porous support layer raw liquid was applied to a surface of a polyester filament nonwoven fabric at 25°C, and after 3 seconds, the nonwoven fabric was immersed in a coagulation bath containing distilled water at 25°C for 30 seconds to coagulate, and washed with hot water at 80°C for 2 minutes to obtain a support membrane in which a porous support layer including PSf was formed on the surface of the polyester filament nonwoven fabric as a substrate. A thickness of the porous support layer in the obtained support membrane was 30 μm.

Next, the obtained support membrane was immersed in a 3 mass% aqueous solution of m-PDA for 2 minutes, the support membrane was slowly pulled up in the vertical direction, and nitrogen was blown from an air nozzle to remove the excess aqueous solution from a surface of the support membrane. In an environment controlled to 25°C, 20 ml of a n-decane solution at 25°C containing 0.12 mass% of TMC was applied such that the surface of the support membrane was completely wetted, and allowed to stand for 1 minute to form a separation functional layer by interfacial polymerization. Next, the obtained membrane was held vertically for 30 seconds, an excess aqueous solution was removed by draining, and then the membrane was washed with hot water at 80°C for 2 minutes. Further, the washed membrane was immersed in a 0.3 mass% aqueous solution of sodium nitrite at 35°C and pH 3 for 1 minute, and then immersed in a 0.1 mass% sodium sulfite aqueous solution for 2 minutes to obtain a composite semipermeable membrane.

[Comparative Example 2]

The composite semipermeable membrane obtained in Comparative Example 1 was immersed in an aqueous solution containing 0.01 mass% of polyacrylic acid and 0.1 mass% of DMT-MM for 6 hours in an environment controlled at 20°C to form a coating layer on the separation functional layer. Thereafter, the composite semipermeable membrane was made vertical, an excess aqueous solution was removed by draining, and the membrane was washed with water at 40°C for 2 minutes.

[Comparative Example 3]

A solution (isopropanol/water = 3/7) containing 0.25 mass% of PVA 1 (degree of saponification: 99.5 mol%, degree of polymerization: 2,600) was brought into contact with the entire surface of the separation functional layer of the composite semipermeable membrane obtained in Comparative Example 1 in an environment controlled at 20°C. The separation functional layer was held at 100°C for 5 minutes in a state where the aqueous solution remained on the surface of the separation functional layer, and the solution was brought into contact with the surface of the separation functional layer again and held at 130°C for 5 minutes to form a coating layer on the separation functional layer. Thereafter, the separation functional layer was washed with water at 20°C for 2 minutes. Finally, the composite semipermeable membrane was immersed in a 14 mass% aqueous solution of isopropanol at 20°C for 5 minutes and subjected to hydrophilization treatment.

[Comparative Example 4]

An aqueous solution containing 0.15 mass% of vinyl alcohol copolymer 1 (Exceval RS-2117), 0.1 mass% of glutaraldehyde, and 0.1 mass% of sulfuric acid was brought into contact with the entire surface of the separation functional layer of the composite semipermeable membrane obtained in Comparative Example 1 in an environment controlled at 20°C. A coating layer was formed on the separation functional layer by blowing hot air at 70°C to the composite semipermeable membrane for 1 minute while the aqueous solution remained on the surface of the separation functional layer. Thereafter, the composite semipermeable membrane was made vertical, an excess aqueous solution was removed by draining, and the membrane was washed with water at 20°C for 2 minutes. Finally, the composite semipermeable membrane was immersed in a 14 mass% aqueous solution of isopropanol at 20°C for 5 minutes to be subjected to hydrophilization treatment.

[Example 1]

An aqueous solution containing 2.0 mass% of PVA 2 (degree of saponification: 98.0 mol% to 99.0 mol%, degree

of polymerization: 900), 0.5 mass% of glutaraldehyde, and 0.1 mass% of sulfuric acid was brought into contact with the entire surface of the separation functional layer of the composite semipermeable membrane obtained in Comparative Example 1 in an environment controlled at 20°C. A coating layer was formed on the separation functional layer by blowing hot air at 70°C to the composite semipermeable membrane for 3 minutes while the aqueous solution remained on the surface of the separation functional layer. Thereafter, the composite semipermeable membrane was made vertical, an excess aqueous solution was removed by draining, and the membrane was washed with water at 20°C for 2 minutes. Finally, the composite semipermeable membrane was immersed in a 14 mass% aqueous solution of isopropanol at 20°C for 5 minutes to be subjected to hydrophilization treatment.

[Example 2]

A coating layer was formed on a separation functional layer and subjected to hydrophilization treatment in the same manner as in Example 1 except that an aqueous solution containing 0.5 mass% of a vinyl alcohol copolymer 2 (Exceval AQ-4104), 0.3 mass% of glutaraldehyde, and 0.1 mass% of sulfuric acid was used, and the time for blowing hot air at 70°C was set to 1 minute.

[Example 3]

A coating layer was formed on a separation functional layer and subjected to hydrophilization treatment in the same manner as in Example 2 except that an aqueous solution containing 0.8 mass% of a vinyl alcohol copolymer 3 (Exceval HR-3010), 0.4 mass% of glutaraldehyde, and 0.1 mass% of sulfuric acid was used.

[Example 4]

A coating layer was formed on a separation functional layer and subjected to hydrophilization treatment in the same manner as in Example 2 except that an aqueous solution containing 1.1 mass% of the vinyl alcohol copolymer 1 (Exceval RS-2117), 0.4 mass% of glutaraldehyde, and 0.1 mass% of sulfuric acid was used.

[Example 5]

A coating layer was formed on a separation functional layer and subjected to hydrophilization treatment in the same manner as in Example 2 except that an aqueous solution containing 0.4 mass% of the vinyl alcohol copolymer 4 (Exceval RS-1717), 0.2 mass% of glutaraldehyde, and 0.1 mass% of sulfuric acid was used.

[Example 6]

A coating layer was formed on a separation functional layer and subjected to hydrophilization treatment in the same manner as in Example 2 except that an aqueous solution containing 0.7 mass% of PVA 2 (degree of saponification: 98.0 mol% to 99.0 mol%, degree of polymerization: 900), 0.3 mass% of the vinyl alcohol copolymer 3 (Exceval HR-3010), 0.4 mass% of glutaraldehyde, and 0.1 mass% of sulfuric acid was used.

[Example 7]

A coating layer was formed on a separation functional layer and subjected to hydrophilization treatment in the same manner as in Example 1 except that the composite semipermeable membrane obtained in Comparative Example 2 and an aqueous solution containing 0.3 mass% of the vinyl alcohol copolymer 3 (Exceval HR-3010), 0.2 mass% of glutaraldehyde, and 0.1 mass% of sulfuric acid were used.

[Example 8]

An aqueous solution containing 1.2 mass% of the alkylene glycol-based polymer 1 (Denacol EX-171) was brought into contact with the surface of the separation functional layer of the composite semipermeable membrane obtained in Comparative Example 1 for 15 minutes in an environment controlled at 20°C to form a coating layer on the separation functional layer. Thereafter, the composite semipermeable membrane was made vertical, an excess aqueous solution was removed by draining, and the membrane was washed with water at 20°C for 2 minutes.

[Example 9]

A coating layer was formed on a separation functional layer in the same manner as in Example 6 except that an aqueous solution containing 0.8 mass% of the alkylene glycol-based polymer 2 (Denacol EX-861) was used, and draining and washing were performed.

Structures of the composite semipermeable membranes obtained in Comparative Examples 1 to 4 and Examples 1 to 9 are shown in Table 1, and the performances thereof are shown in Table 2.

[Table 1]

Table 1

| | Membrane structure | | | | |
|---|---|---|---|---|---|
| | Developed area ratio Sdr | Root mean square height Sq | Total thickness T of separation functional layer and coating layer | Static friction coefficient μs | Dynamic friction coefficient μd |
| | % | nm | nm | - | - |
| Comp. Ex. 1 | 96 | 157 | 13 | 1.42 | 0.74 |
| Comp. Ex. 2 | 104 | 175 | 14 | 1.49 | 0.79 |
| Comp. Ex. 3 | 45 | 86 | 122 | 1.36 | 0.74 |
| Comp. Ex. 4 | 96 | 158 | 14 | 1.34 | 0.71 |
| Ex. 1 | 75 | 144 | 14 | 1.27 | 0.71 |
| Ex. 2 | 97 | 159 | 14 | 1.14 | 0.69 |
| Ex. 3 | 95 | 156 | 14 | 1.15 | 0.69 |
| Ex. 4 | 90 | 151 | 15 | 1.24 | 0.72 |
| Ex. 5 | 87 | 147 | 13 | 1.29 | 0.72 |
| Ex. 6 | 94 | 156 | 14 | 1.11 | 0.71 |
| Ex. 7 | 102 | 173 | 15 | 1.28 | 0.72 |
| Ex. 8 | 101 | 168 | 15 | 1.22 | 0.71 |
| Ex. 9 | 95 | 152 | 14 | 1.15 | 0.69 |

[Table 2]

Table 2

| | Membrane performance | | |
|---|---|---|---|
| | At the time of production | | After abrasion test |
| | NaCl removal rate | Membrane permeation flux | NaCl removal rate |
| | % | m/d | % |
| Comp. Ex. 1 | 99.76 | 1.60 | 98.94 |
| Comp. Ex. 2 | 99.71 | 1.57 | 98.72 |
| Comp. Ex. 3 | 99.69 | 1.05 | 99.09 |
| Comp. Ex. 4 | 99.79 | 1.40 | 99.15 |
| Ex. 1 | 99.78 | 1.40 | 99.35 |
| Ex. 2 | 99.81 | 1.38 | 99.48 |

(continued)

| | Membrane performance | | |
|---|---|---|---|
| | At the time of production | | After abrasion test |
| | NaCl removal rate | Membrane permeation flux | NaCl removal rate |
| | % | m/d | % |
| Ex. 3 | 99.82 | 1.29 | 99.51 |
| Ex. 4 | 99.78 | 1.18 | 99.30 |
| Ex. 5 | 99.80 | 1.33 | 99.29 |
| Ex. 6 | 99.79 | 1.27 | 99.41 |
| Ex. 7 | 99.70 | 1.19 | 99.32 |
| Ex. 8 | 99.74 | 1.31 | 99.36 |
| Ex. 9 | 99.76 | 1.08 | 99.43 |

As shown in Table 2, the composite semipermeable membrane in Examples 1 to 9 exhibited excellent abrasion resistance and water-permeating performance as compared with the composite semipermeable membrane in Comparative Examples 1 to 4.

From the comparison of Examples 2 to 3, Example 6, and Example 9 with Example 8, it can be seen that when μs is set to 1.08 to 1.20, more excellent abrasion resistance is exhibited.

Although the present invention has been described in detail with reference to specific embodiments, it is apparent to those skilled in the art that various changes and modifications may be made without departing from the spirit and scope of the present invention. The present application is based on Japanese Patent Application No. 2023-015305 filed on February 3, 2023, the content of which is incorporated herein by reference.

REFERENCE SIGNS LIST

1 composite semipermeable membrane
2 support membrane
3 separation functional layer
4 coating layer
5 protrusion interior
6 tensile tester
7 pulley
8 weight
9 composite semipermeable membrane
10 lapping film abrasive (particle size # 2000)
11 metal plate

## Claims

**1.** A composite semipermeable membrane comprising:

a support membrane;
a separation functional layer containing a crosslinked polyamide disposed on the support membrane; and
a coating layer disposed on the separation functional layer, wherein
a developed area ratio Sdr of a coating layer-side surface of the composite semipermeable membrane is 60% to 200%, and
a static friction coefficient μs between the coating layer-side surface of the composite semipermeable membrane and a lapping film abrasive having a particle size of # 2000 is 0.40 to 1.30.

**2.** The composite semipermeable membrane according to claim 1, wherein

a dynamic friction coefficient μd between the coating layer-side surface of the composite semipermeable membrane and a lapping film abrasive having a particle size of # 2000 is 0.25 to 0.73.

**3.** The composite semipermeable membrane according to claim 1 of 2, wherein
the coating layer-side surface of the composite semipermeable membrane has a root mean square height Sq of 140 nm to 300 nm.

**4.** The composite semipermeable membrane according to claim 1 or 2, wherein
the coating layer contains at least one of a vinyl alcohol-based polymer and an alkylene glycol-based polymer.

**5.** The composite semipermeable membrane according to claim 4, wherein
the vinyl alcohol-based polymer has a degree of saponification of 96 mol% or more.

**6.** The composite semipermeable membrane according to claim 4, wherein
the vinyl alcohol-based polymer has a degree of polymerization of 100 to 1,500.

**7.** The composite semipermeable membrane according to claim 4, wherein

the vinyl alcohol-based polymer is a vinyl alcohol copolymer containing a structure represented by the following general formula (1),

[Chem. 1]

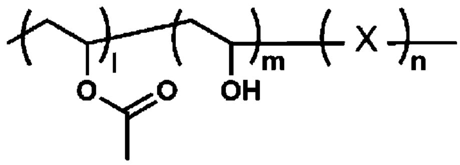

(1)

provided that, in the general formula (I), X is a divalent hydrocarbon group having 2 to 6 carbon atoms, and l, m and n are the number of repeating units.

**8.** The composite semipermeable membrane according to claim 7, wherein
X in the general formula (1) is a divalent hydrocarbon group having 2 carbon atoms.

**9.** The composite semipermeable membrane according to claim 8, wherein
X in the general formula (1) is an ethylene group.

**10.** The composite semipermeable membrane according to claim 7, wherein
the vinyl alcohol copolymer has a copolymerization ratio n/(l + m + n) of 0.035 to 0.16.

**11.** The composite semipermeable membrane according to claim 4, wherein
the alkylene glycol-based polymer has a molecular weight of 500 to 500,000.

**12.** A composite semipermeable membrane module comprising the composite semipermeable membrane according to claim 1 or 2.

**13.** A fluid separation device comprising the composite semipermeable membrane module according to claim 12.

FIG. 1

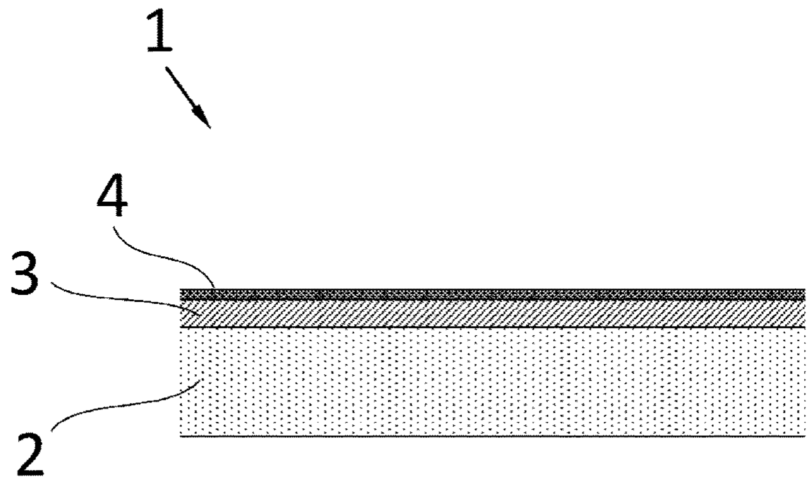


FIG. 2

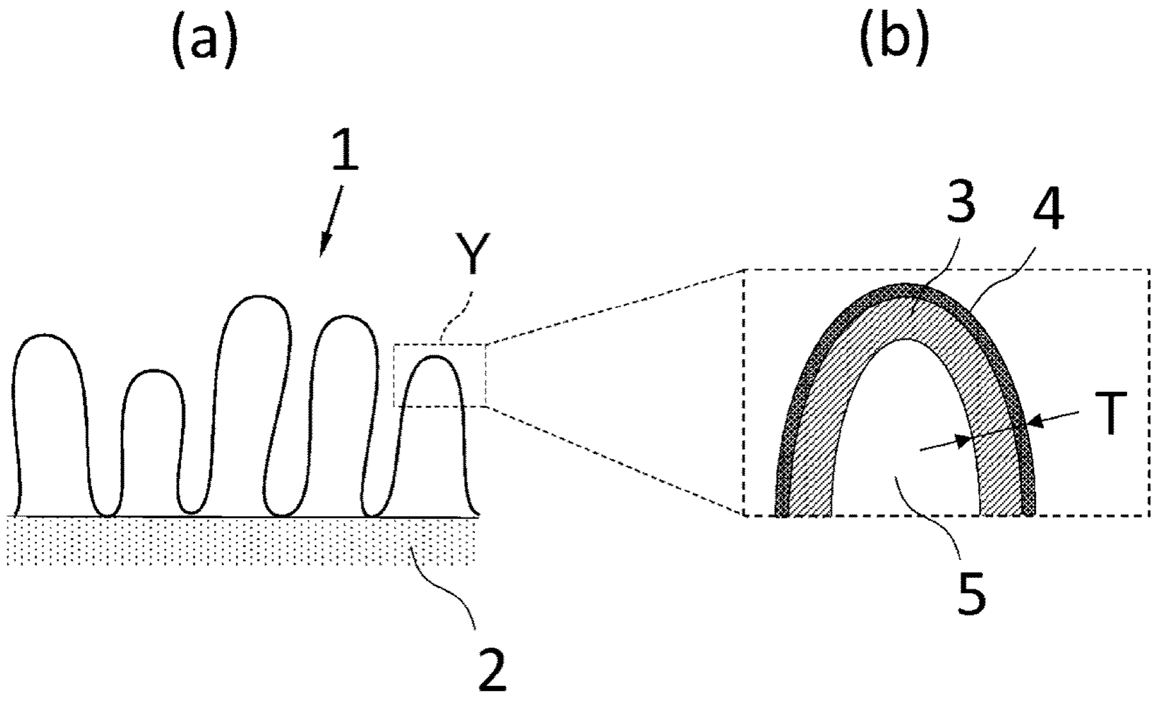

*FIG. 3*

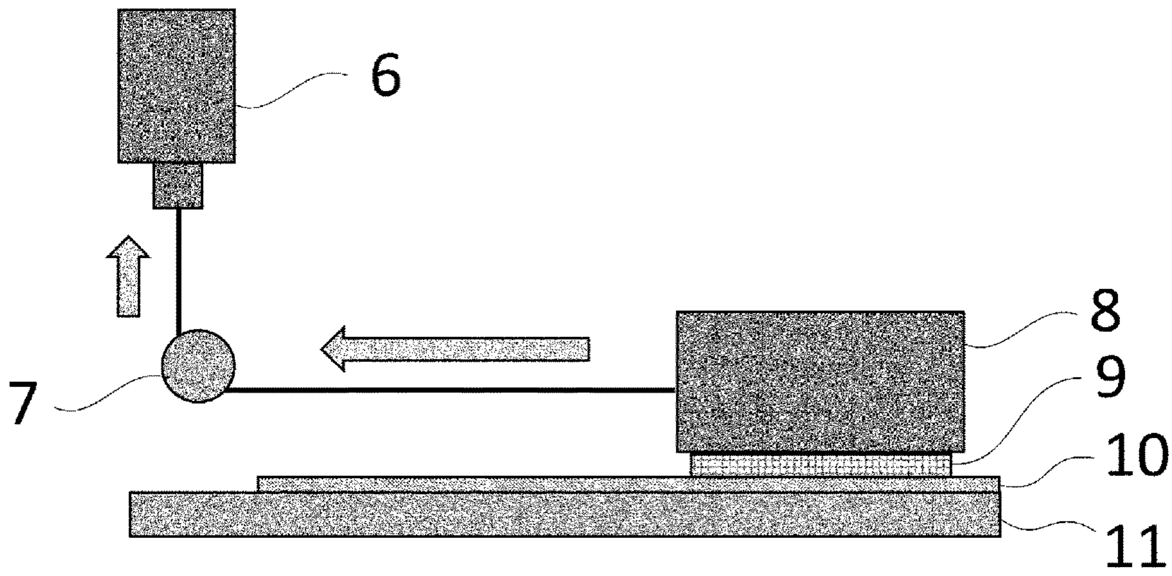

*FIG. 4*

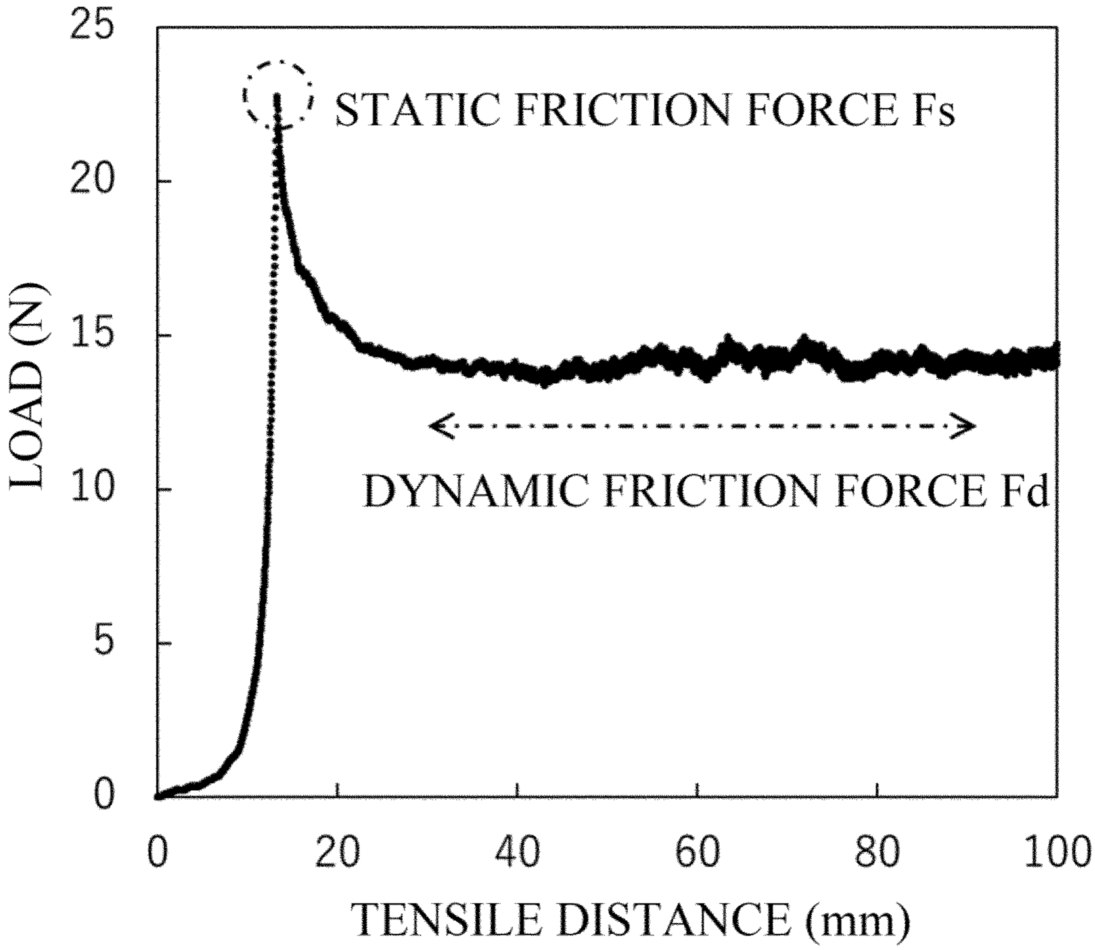
25
20
15
10
5
0
LOAD (N)
STATIC FRICTION FORCE Fs
DYNAMIC FRICTION FORCE Fd
0
20
40
60
80
100
TENSILE DISTANCE (mm)

## INTERNATIONAL SEARCH REPORT

International application No.
**PCT/JP2024/003269**

### A. CLASSIFICATION OF SUBJECT MATTER

***B01D 71/56***(2006.01)i; ***B01D 69/00***(2006.01)i; ***B01D 69/02***(2006.01)i; ***B01D 69/10***(2006.01)i; ***B01D 69/12***(2006.01)i; ***B01D 71/38***(2006.01)i
FI: B01D71/56; B01D69/10; B01D69/12; B01D69/00; B01D69/02; B01D71/38

According to International Patent Classification (IPC) or to both national classification and IPC

### B. FIELDS SEARCHED

Minimum documentation searched (classification system followed by classification symbols)

B01D71/56; B01D69/00; B01D69/02; B01D69/10; B01D69/12; B01D71/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2014/104241 A1 (TORAY INDUSTRIES, INC.) 03 July 2014 (2014-07-03) entire text, all drawings | 1-13 |
| A | JP 2019-150818 A (ZHEJIANG UNIVERSITY) 12 September 2019 (2019-09-12) entire text, all drawings | 1-13 |
| A | JP 2006-198461 A (TORAY INDUSTRIES, INC.) 03 August 2006 (2006-08-03) entire text, all drawings | 1-13 |
| A | CN 111495217 A (BEIJING SHANGYUAN TECH CO., LTD.) 07 August 2020 (2020-08-07) entire text, all drawings | 1-13 |
| A | CN 102553460 A (FUYANG MEIYIWEIER ENVIRONMENTAL PROT EQUIPMENT CO., LTD.) 11 July 2012 (2012-07-11) entire text, all drawings | 1-13 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/003269**

| Patent document cited in search report | Publication date (day/month/year) | Patent family member(s) | Publication date (day/month/year) |
|---|---|---|---|
| WO 2014/104241 A1 | 03 July 2014 | (Family: none) | |
| JP 2019-150818 A | 12 September 2019 | US 2019/0282967 A1<br>CN 108079806 A | |
| JP 2006-198461 A | 03 August 2006 | (Family: none) | |
| CN 111495217 A | 07 August 2020 | (Family: none) | |
| CN 102553460 A | 11 July 2012 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003200026 A
- JP 2019098329 A
- JP 2023015305 A